# EUROPÄISCHE PATENTSCHRIFT

(11) **EP 3 696 436 B1**
(45) Veröffentlichungstag und Bekanntmachung des Hinweises auf die Patenterteilung: **01.02.2023**
(21) Anmeldenummer: 19209690.7
(22) Anmeldetag: 18.11.2019
(51) Int. Cl.: F16D 13/38

(54) **KUPPLUNGSVORRICHTUNG FÜR EINE LANDWIRTSCHAFTLICHE ARBEITSMASCHINE**
COUPLING DEVICE FOR AN AGRICULTURAL WORKING MACHINE
DISPOSITIF D'EMBRAYAGE POUR UNE MACHINE DE TRAVAIL AGRICOLE

(30) Priorität: 14.02.2019 DE 102019103775
(43) Veröffentlichungstag der Anmeldung: 19.08.2020
(73) Patentinhaber: CLAAS Industrietechnik GmbH, 33106 Paderborn (DE)
(72) Erfinder: Knoop, Patrick, 33154 Salzkotten (DE); Schulte, Michael, 33129 Delbrück (DE)
(74) Vertreter: CLAAS Gruppe

(56) Entgegenhaltungen:
- US-A- 4 144 955
- US-A- 5 383 544

## Beschreibung

Die vorliegende Erfindung betrifft eine Kupplungsvorrichtung für eine landwirtschaftliche Arbeitsmaschine gemäß dem Oberbegriff des Anspruches 1.

Eine Kupplungsvorrichtung für eine landwirtschaftliche Arbeitsmaschine der eingangs genannten Art kommt an selbstfahrenden Erntemaschine oder Schleppern zum Einsatz, um beispielsweise ein Pumpenverteilergetriebe zum Antreiben unterschiedlicher Pumpen und Arbeitsaggregate schaltbar zu betreiben. Die Kupplungsvorrichtung ist zwischen einem offenen und einem geschlossenen Schaltzustand überführbar, wobei die Kupplungsvorrichtung in geschlossenem Schaltzustand ein Drehmoment von einer Antriebswelle, insbesondere eines Antriebsmotors, auf einen Abtrieb überträgt.

Bei landwirtschaftlichen Arbeitsmaschinen kann der Abtrieb oftmals als eine Riemenscheibe ausgeführt sein. Eine derartige Kupplungsvorrichtung in Form einer kompakten Lamellenkupplung ist beispielsweise aus der DE 10 2010 049 811 A1 oder der EP 3 239 549 A1 bekannt. Die darin beschriebenen, als Lamellenkupplungen ausgeführten Kupplungsvorrichtungen zeichnen sich durch eine kompakte Bauweise aus, welche jedoch in dem beschränkten Bauraum einer landwirtschaftlichen Arbeitsmaschine die Anordnung mit weiteren anzutreibenden Maschinenelementen erschwert. Derartige ausgeführte Lamellenkupplungen ermöglichen keinen Durchtrieb z.B. für eine weitere Riemenscheibe. Zudem weisen die Lamellenkupplungen eine für den Einsatz in einer landwirtschaftlichen Arbeitsmaschine zu geringe Wärmekapazität auf.

Ausgehend von dem vorstehend genannten Stand der Technik liegt der vorliegenden Erfindung die Aufgabe zugrunde, eine Kupplungsvorrichtung der eingangs genannten derart weiterzubilden, dass die Kupplungsvorrichtung bei reduziertem Bauraumbedarf eine ausreichende Wärmekapazität für das einzukuppelnde Trägheitsmoment zur Verfügung stellt sowie einen unterbrechungsfreien Durchtrieb eines zusätzlichen Abtriebs ermöglicht.

Diese Aufgabe wird erfindungsgemäß durch die Merkmale des Anspruches 1 gelöst. Vorteilhafte Weiterbildungen sind Gegenstand der Unteransprüche.

Gemäß dem Anspruch 1 wird eine Kupplungsvorrichtung für eine landwirtschaftliche Arbeitsmaschine vorgeschlagen, wobei die Kupplungsvorrichtung einen ersten, einen Abtrieb aufweisenden, Kupplungsteil und einen zweiten, axial verschieblichen, Kupplungsteil umfasst, durch welche die Kupplungsvorrichtung zwischen einem offenen und einem geschlossenen Schaltzustand überführbar ist, sind, wobei der erste Kupplungsteil und der zweite Kupplungsteil auf einer Antriebswelle, insbesondere eines Antriebsmotors, angeordnet sind, wobei die Kupplungsvorrichtung in geschlossenem Schaltzustand ein Drehmoment von der Antriebswelle auf den Abtrieb überträgt. Um einen unterbrechungsfreien Durchtrieb eines zusätzlichen Abtriebs zu ermöglichen, ist erfindungsgemäß vorgesehen, dass die, insbesondere hydraulisch betätigte, Kupplungsvorrichtung mindestens zwei axial zueinander beabstandete, trocken laufende Lamellenelemente aufweist, welche koaxial zu einem Durchtrieb und in axialer Richtung relativ zu diesem verschieblich angeordnet sind, wobei der erste Kupplungsteil und der zweite Kupplungsteil in geöffneter Schaltstellung relativ zum Durchtrieb stillstehen, wobei der Durchtrieb unabhängig von einem Schaltzustand der Kupplungsvorrichtung einen zusätzlichen Abtrieb antreibt. Durch die Lamellenkupplungsbauweise mit axial beabstandet angeordneten Lamellenelemente kann eine kompakte Bauform mit geringem Bauraumbedarf der Kupplungsvorrichtung erreicht werden. Zudem können durch diese Bauweise auftretende Gegenkräfte beim Kupplungsvorgang reduziert werden, die zu einer Verformung der Lamellenelemente führen können. Der zusätzliche Abtrieb kann dem Durchtrieb mittelbar oder unmittelbar zugeordnet sein. Insbesondere kann der zusätzliche Abtrieb auf der der Antriebswelle abgewandten Seite der Kupplungsvorrichtung angeordnet sein.

Erfindungsgemäss sind die mindestens zwei Lamellenelemente mit Reibbelägen in pad-bauweise versehen.

Diese Ausgestaltung ermöglicht den trockenen Betrieb der Kupplungsvorrichtung, so dass die Lamellenelemente nicht in einem Ölbad laufen. Durch die Ausgestaltung der Lamellenelemente in trockener pad-bauweise kann eine höhere Wärme- bzw. Reibenergieaufnahme erreicht werden, so dass die Kupplungsvorrichtung eine höhere Wärmekapazität aufweist. Die Anzahl der Lamellenelemente ist in Abhängigkeit vom zu übertragenden Drehmoment skalierbar.

Insbesondere sind die mindestens zwei Lamellenelemente axial verschieblich auf einem koaxial zu dem Durchtrieb angeordneten Zwischenelement angeordnet, welches drehfest auf dem Durchtrieb angeordnet ist. Die mindestens zwei Lamellenelemente können mit dem Zwischenelement rotieren.

Hierbei kann in offenem Schaltzustand der Kupplungsvorrichtung zwischen dem Zwischenelement und dem ersten Kupplungsteil sowie dem zweiten Kupplungsteil eine Relativbewegung auftreten. Während die mindestens zwei Lamellenelemente mit dem Zwischenelement rotieren können, stehen der erste Kupplungsteil und der zweite Kupplungsteil still.

Insbesondere können die Lamellenelemente durch eine Zwischendruckplatte axial zueinander beabstandet sein.

Dazu kann die Zwischendruckplatte mit dem ersten Kupplungsteil verbunden sein, wobei die Zwischendruckplatte durch Kraftspeicher rückstellbar ist. Die Rückstellung der, insbesondere nockengeführten, Zwischendruckplatte beim Überführen der Kupplungsvorrichtung vom geschlossenen in den offenen Schaltzustand kann durch als Federn ausgeführte Kraftspeicher erfolgen. Hierzu können die Federn in die Zwischendruckplatte integriert sein.

Dabei können zur axialen Führung der Zwischendruckplatte koaxial zum Durchtrieb angeordnete Führungsstifte vorgesehen sein, die in den zweiten Kupplungsteil eingelassen sind. Dies ist besonders vorteilhaft, da bereits vor einer vollständigen Montage der Kupplungsvorrichtung die Führung der Zwischendruckplatte ermöglicht wird. Die der Rückstellung dienenden, als Kraftspeicher ausgeführten Federn können mittels der Führungsstifte geführt werden.

Weiterhin kann der zweite Kupplungsteil eine axial verschiebliche Druckplatte umfassen, an welcher eine äußere Lamelle angeordnet ist, die mit einer Lamelle an der Zwischendruckplatte in Eingriff bringbar ist, wobei die Druckplatte durch Bolzen mit einem die Kupplungsvorrichtung zumindest abschnittsweise umgebenden Gehäuseteil drehfest verbunden ist. Eine auf den jeweiligen Bolzen angeordnete Rückstellfeder ermöglicht das sichere Öffnen der Kupplungsvorrichtung. Hierzu wird die Druckplatte durch die Rückstellfedern in unbelasteter Ausgangslage der Kupplungsvorrichtung gegen einen Anschlag des Gehäuseteils gedrückt.

Vorzugsweise können die jeweiligen Bolzen in Gleitlagern geführt sein, die in dem Gehäuseteil angeordnet sind. Hierdurch wird eine zuverlässige Verschiebbarkeit der der Drehmomentübertragung dienenden Bolzen erreicht. Bevorzugt können die Bolzen beschichtet ausgeführt sein.

Gemäß einer bevorzugten Weiterbildung ist vorgesehen, dass die Verbindung der Bolzen mit der Druckplatte ohne Unterbrechungen einer Reibfläche, die mit einer Lamelle in Reibkontakt bringbar ist, erfolgt. Hierzu können in der Druckplatte Durchbohrungen ringförmig verteilt angeordnet sein, welche sich abschnittsweise in axialer Richtung der Druckplatte erstrecken, ohne die Reibfläche zu durchdringen. Die Durchbohrungen sind auf der die Reibfläche aufweisenden Seite durch eine im Wesentlichen ringförmige Aussparung miteinander verbunden, in welche die Bolzen mit ihrem freien Ende hineinragen. Die im Wesentlichen ringförmige Aussparung ist abschnittsweise als eine Hinterschneidung der Reibfläche ausgeführt.

Insbesondere kann zur Betätigung der Kupplungsvorrichtung ein koaxial zu dem Durchtrieb angeordneter, axial verschieblicher Ringkolben vorgesehen sein, der zur Beaufschlagung mit einem hydraulischen Druck eingerichtet ist, der durch eine Zuleitung in dem Durchtrieb zuführbar ist. Der Ringkolben kann mit dem Gehäuseteil einen Druckraum ausbilden, der mit hydraulischen Druck beaufschlagt wird, um die Kupplungsvorrichtung zu schließen.

Dabei kann zwischen dem Durchtrieb und dem Ringkolben ein durch Wellendichtringe abgedichteter Ölraum ausgebildet sein, wobei sich die Wellendichtringe durch eine hohe Druckfestigkeit sowie eine dem Ölraum abgewandte Staublippe auszeichnen. Durch eine Drehdurchführung im Durchtrieb kann Hydrauliköl zugeführt werden, welches in den Ölraum gelangt. Von dem Ölraum kann das Hydrauliköl durch einen Kanal in den Druckraum gelangen, um den Ringkolben mit Druck zu beaufschlagen, um die Kupplungsvorrichtung in ihren geschlossenen Schaltzustand zu überführen. Im geschlossen Schaltzustand stehen sowohl an dem durch die Kupplungsvorrichtung schaltbaren Abtrieb als auch an dem zusätzlichen Abtrieb, der durch die Kupplungsvorrichtung unabhängig vom Schaltzustand antreibbar ist, das von dem Durchtrieb eingeleitete Drehmoment zur Verfügung.

Weiterhin können zur Abdichtung des Ringkolbens gegenüber dem Gehäuseteil Quadratringdichtungen in einer inneren und einer äußeren umlaufenden Nut in einem topfförmigen, den Ringkolben abschnittsweise radial und axial umschließenden Abschnitt des Gehäuseteils angeordnet sein.

Bevorzugt kann der Durchtrieb, der unabhängig von einem Schaltzustand der Kupplungsvorrichtung den zusätzlichen Abtrieb antreibt, die Antriebswelle eines Antriebsmotors sein.

Die vorliegende Erfindung wird nachstehend anhand eines in den Zeichnungen dargestellten Ausführungsbeispieles näher erläutert.

Es zeigen:
- Fig. 1: eine schematische Darstellung einer Kupplungsvorrichtung in einer Schnittansicht;
- Fig. 2: eine schematische Teilansicht der Kupplungsvorrichtung in geschlossener Schaltstellung;
- Fig. 3: eine schematische Teilansicht von Mitteln zur Führung und Rückstellung einer Zwischendruckplatte der Kupplungsvorrichtung;
- Fig. 4: eine perspektivische Teilansicht einer Druckplatte der Kupplungsvorrichtung;
- Fig. 5: einen Zeichnungsausschnitt der Kupplungsvorrichtung.

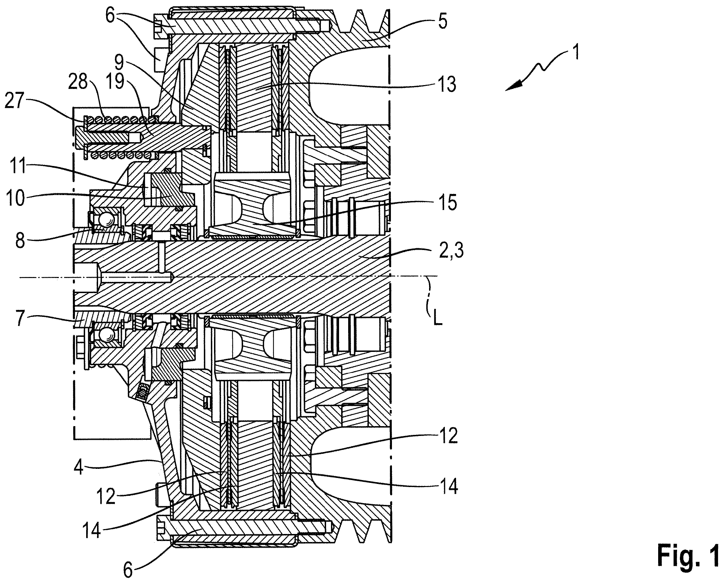

In Fig. 1 ist eine schematische Darstellung einer Kupplungsvorrichtung 1 in einer Schnittansicht gezeigt. Die Kupplungsvorrichtung 1 ist auf einem als Antriebswelle 3, insbesondere eines Antriebsmotors, ausgeführten Durchtrieb 2 angeordnet. Mit L ist eine Längsachse der Antriebswelle 3 bezeichnet, welche zugleich die Symmetrielinie der Kupplungsvorrichtung 1 darstellt. Die Kupplungsvorrichtung 1 umfasst ein koaxial zum Durchtrieb 2 angeordnetes Gehäuseteil 4, welches sich abschnittsweise in axialer Richtung erstreckt und weitere Komponenten der Kupplungsvorrichtung 1 umschließt. Das Gehäuseteil 4 ist mittels Schraubverbindungen 6 mit einem Abtrieb 5 drehfest verbunden. Der Abtrieb 5 der Kupplungsvorrichtung 1 ist im dargestellten Ausführungsbeispiel als eine Riemenscheibe ausgeführt.

Dem Gehäuseteil 4 ist ein zusätzlicher Abtrieb 7 nachgeordnet, welcher auf der dem Abtrieb 5 gegenüberliegenden Seite der Antriebswelle 3 drehfest angeordnet ist. Das Gehäuseteil 4 ist auf einem axialen Abschnitt des zusätzlichen Abtriebs 7 mittels eines Lagers 8, insbesondere eines Wälzlagers, relativ zum zusätzlichen Abtrieb 7 drehbar angeordnet. Das Gehäuseteil 4, der damit verbundene Abtrieb 5 sowie der zusätzliche Abtrieb 7 sind gegen eine axiale Verschiebung auf der Antriebswelle 3 gesichert. Das Gehäuseteil 4 und der damit durch die Schraubverbindungen 6 verbundene Abtrieb 5 bilden einen ersten Kupplungsteil der Kupplungsvorrichtung 1.

Die Kupplungsvorrichtung 1 umfasst weiterhin eine Druckplatte 9, die koaxial zum Durchtrieb 2 im Inneren des Gehäuseteils 4 angeordnet ist. Die axial verschiebliche Druckplatte 9 bildet einen zweiten Kupplungsteil der Kupplungsvorrichtung 1. Durch Betätigung des zweiten Kupplungsteils wird die Kupplungsvorrichtung 1 zwischen geöffneter und geschlossener Schaltstellung überführt. Die Betätigung der Druckplatte 9 erfolgt hydraulisch. Hierzu wird ein Ringkolben 10, der mit einem diesen abschnittsweise umschließenden Abschnitt des Gehäuseteils 4 einen im Wesentlichen ringförmigen Druckraum 11 ausbildet, auf seiner der Druckplatte 9 abgewandten Seite mit einem hydraulischen Druck beaufschlagt. Der Ringkolben 10 liegt abschnittsweise radial an der Druckplatte 9 an, so dass diese bei der Druckbeaufschlagung axial verlagert wird.

Der Druckplatte 9 und dem Abtrieb 5 sind an ihren einander zugewandten Stirnflächen jeweils äußere Lamellenelemente 12 zugeordnet. Dem Abtrieb 5 kann alternativ eine separate Druckplatte zugeordnet sein, welcher das äußere Lamellenelemente 12 zugeordnet ist. Zwischen der Druckplatte 9 und dem Abtrieb 5 ist zumindest eine Zwischendruckplatte 13 angeordnet. Die Zwischendruckplatte 13 ist drehfest, jedoch axial verschieblich mit dem Abtrieb 5 verbunden. An den Stirnflächen der Zwischendruckplatte 13 sind axial zueinander beabstandet Lamellenelemente 14 angeordnet. In geschlossenem Schaltzustand der Kupplungsvorrichtung 1 tritt eine reibschlüssige Verbindung zwischen den äußeren Lamellenelementen 12 und den diesen zugewandt angeordneten Lamellenelemente 14 auf. Die äußeren Lamellenelemente 12 als auch die Lamellenelemente 14 sind in pad-bauweise ausgeführt, wie sie von Trockenkupplungen bekannt ist. Somit laufen die äußeren Lamellenelemente 12 und die gegenüberliegenden Lamellenelemente 14 nicht in einem Ölbad, wie es für Lamellenkupplungen üblich ist.

Auf der Antriebswelle 3 ist ein Zwischenelement 15 koaxial zu dieser drehfest angeordnet. Die Lamellenelemente 14 sind mit dem Zwischenelement 15 drehfest verbunden, jedoch gegenüber dem Zwischenelement 15 axial verschieblich geführt.

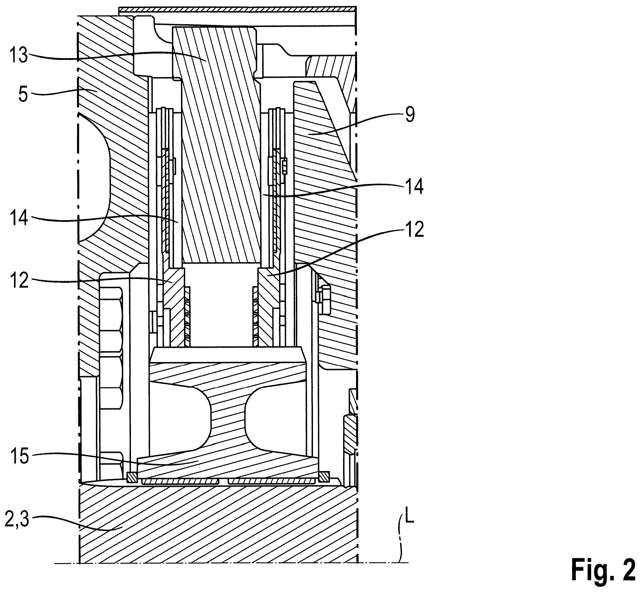

Die Darstellung in Fig. 2 zeigt eine schematische Teilansicht der Kupplungsvorrichtung 1 in geschlossener Schaltstellung. In Fig. 2 sind das Zwischenelement 15 und die äußeren Lamellenelemente 12 und die Lamellenelemente 14 näher dargestellt. Die Lamellenelemente 12 und 14 sind in pad-bauweise ausgeführt. Die Lamellenelemente 12 und 14 weisen ein großes Innenprofil auf, wodurch die Gegenkraft im Kupplungsvorgang reduziert und einer ungewollten Verformung entgegengewirkt wird. Zudem wird durch das große Innenprofil in Kombination mit der pad-bauweise der Lamellenelemente 12 und 14 eine große überstrichene Fläche zur Wärme bzw. Reibenergieaufnahme geschaffen.

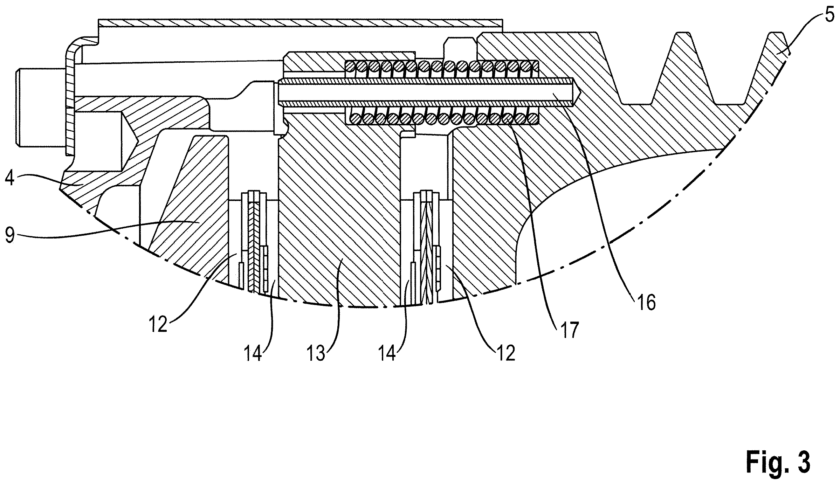

Fig. 3 zeigt eine schematische Teilansicht von Mitteln zur Führung und Rückstellung der Zwischendruckplatte 13 der Kupplungsvorrichtung 1. In dieser Teilansicht ist die axial verschiebliche Anordnung der Zwischendruckplatte 13 an dem Abtrieb 5 näher dargestellt. Die Zwischendruckplatte 13 ist durch koaxial zur Längsachse L angeordnete Führungsstifte 16 geführt mit dem Abtrieb 5 verbunden. Die Zwischendruckplatte 13 ist dabei in axialer Richtung verschieblich, um beim Kupplungsvorgang von der Druckplatte 9 gegen das äußere Lamellenelement 12 an der Stirnfläche des Abtriebs 5 gepresst zu werden. Eine koaxial zu dem jeweiligen Führungsstift 16 angeordneter Kraftspeicher 17, der als Druckfeder ausgeführt sein kann, stellt die für die Rückstellung der Zwischendruckplatte 13 erforderliche Rückstellkraft bereit, wenn die Kupplungsvorrichtung 1 vom dargestellten geschlossenen in den geöffneten Schaltzustand überführt wird. Die Führungsstifte 16 und die als Druckfedern ausgeführten Kraftspeicher 17 sind in die Zwischendruckplatte 13 und den Abtrieb 5 integriert. Die Führungsstifte 16 ermöglichen dabei die Führung der Zwischendruckplatte 13 bereits vor der vollständigen Montage der Kupplungsvorrichtung 1, wodurch der Montageprozess vereinfacht wird.

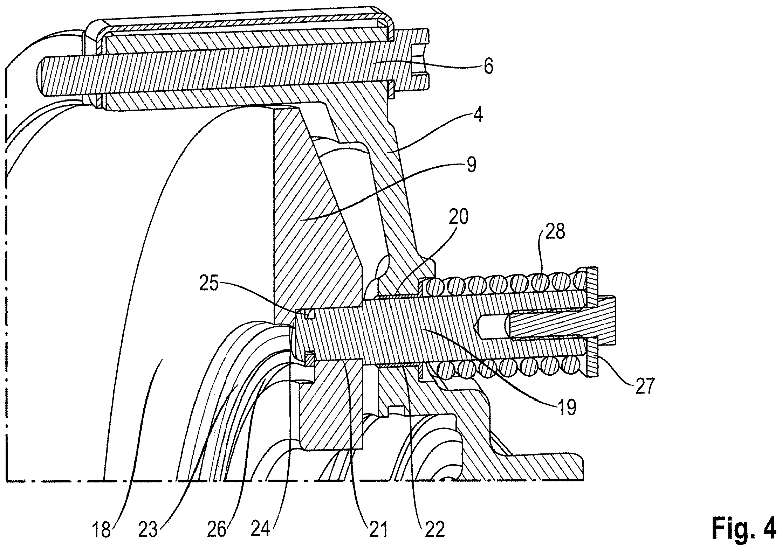

In Fig. 4 ist schematisch eine perspektivische Teilansicht der Druckplatte 9 der Kupplungsvorrichtung 1 dargestellt. Die Druckplatte 9 weist eine Reibfläche 18 auf, die mit dem der Druckplatte 9 zugeordneten äußeren Lamellenelement 12 reibschlüssig verbindbar ist. Zur Drehmomentübertragung und Rückstellung der Druckplatte 9 beim Öffnen der Kupplungsvorrichtung 1 sind Bolzen 19 vorgesehen, die mit der Druckplatte 9 fest verbunden sind. Der jeweilige Bolzen 19 erstreckt sich durch eine Durchgangsbohrung 20 in dem Gehäuseteil 4 und eine korrespondierende Durchbohrung 21 in der Druckplatte 9. In der jeweiligen Durchgangsbohrung 20 im Gehäuseteil 4 ist ein Gleitlager 22 angeordnet, welche der axialen Verschiebbarkeit der Bolzen 19 dient. Die Bolzen 19 können beschichtet sein, um gute Gleiteigenschaften zu erreichen.

Um eine unterbrechungsfrei Reibfläche 18 zu erhalten, ist vorgesehen, dass sich die in der Druckplatte 9 angeordneten Durchbohrungen 21 abschnittsweise in axialer Richtung der Druckplatte 9 erstrecken, ohne die Reibfläche 18 zu durchdringen. Die Durchbohrungen 21 sind auf der die Reibfläche 18 aufweisenden Seite der Druckplatte 9 durch eine ringförmige Aussparung 22 miteinander verbunden. In die ringförmige Aussparung 23 ragen die Bolzen 19 mit ihrem einen Ende hinein, ohne über die Reibfläche 18 überzustehen. Die Aussparung 23 ist abschnittsweise als eine Hinterschneidung der Reibfläche 18 ausgeführt, so dass sich der Bolzen 19 an dem sich durch die Hinterschneidung ausbildenden Absatz 24 teilweise abstützt. Eine radiale Nut 25 an dem in der Druckplatte 9 aufgenommenen Ende des Bolzens 19 dient der Aufnahme eines Sicherungselementes 26, um den Bolzen gegen eine ungewollte axiale Verlagerung zu sichern.

Am freien Ende des jeweiligen Bolzens 19, welcher auf der Außenseite des Gehäuseteils 4 aus diesem herausragt, ist ein Anschlag 27 befestigt. Auf dem jeweiligen Bolzen 19 ist ein Federelement 28 angeordnet. Das jeweilige Federelement 28 stützt sich an dem Gehäuseteil 4 und dem Anschlag 27 ab. Mittels der Federelemente 28 wird die Druckplatte 9 zurückgestellt, wenn die Kupplungsvorrichtung 1 in ihren geöffneten Schaltzustand überführt wird.

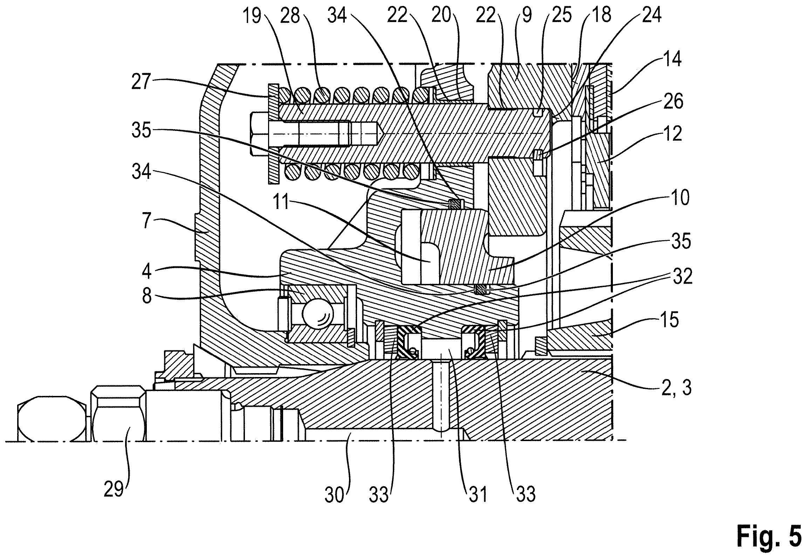

Die Darstellung in Fig. 5 zeigt einen Zeichnungsausschnitt der Kupplungsvorrichtung 1. Die Antriebswelle 3 weist an ihrem freien Ende eine Drehdurchführung 29 auf. Durch die Drehdurchführung 29 ist mit Druck beaufschlagtes Hydrauliköl durch einen Kanal 30 einem zwischen der Antriebswelle 3 und dem Gehäuseteil 4 ausgebildeten Ölraum 31 zuführbar. Der Ölraum 31 ist mit dem Druckraum 11 verbunden, um den Ringkolben 10 mit Hydrauliköl zu versorgen.

Da der Ringkolben 10 in Abhängigkeit vom Schaltzustand der Kupplungsvorrichtung 1 zeitweise durch die mit einer Differenzdrehzahl gegenüber dem Gehäuseteil 4 drehenden Antriebswelle 3 mit Hydrauliköl versorgt werden muss, treten unterschiedliche Druckverhältnisse auf. Während des Ein oder Ausrückens der Kupplungsvorrichtung 1 treten in dem Ölraum 31 hohe Drücke in Verbindung mit der Differenzdrehzahl zwischen der Antriebswelle 3 und dem Gehäuseteil 4 auf, während in geschlossenem Schaltzustand der Ölraum 31 gegenüber einem höheren statischen Druck abgedichtet werden muss. Zur Abdichtung des Ölraumes 31 kommen zwei in einem definierten Abstand zueinander angeordnete Wellendichtringe 32 zur Anwendung. Die Wellendichtringe 32 zeichnen sich durch eine hohe Druckfestigkeit sowie eine dem Ölraum abgewandte Staublippe aus. Die Wellendichtringe 32 können bevorzugt als Vierlippenringe ausgeführt sein. Um die Wellendichtringe 32 axial abzustützen, sind Stützscheiben 33 vorgesehen, die jeweils auf der dem Ölraum 31 abgewandten Seite der Wellendichtringe 32 angeordnet sind.

Um den Druckraum 11 gegenüber der Druckplatte 7 und den weiteren Komponenten der Kupplungsvorrichtung 1 abzudichten, die von dem Gehäuseteil 4 umfasst sind, sind in radialen Nuten 34 des Gehäuseteils 4, der den axial verlagerbaren Ringkolben 10 abschnittsweise umgibt, Dichtelemente 35 angeordnet. Die Dichtelemente 35 sind insbesondere als Quadratringdichtung ausgeführt.

In geöffnetem Schaltzustand der Kupplungsvorrichtung 1 wird die Druckplatte 9 und mit dieser der Ringkolben 10 durch die Rückstellkraft der Federelemente 28 zu den äußeren Lamellen 12 axial beabstandet. Zugleich führt die Rückstellkraft der Kraftspeicher 17 dazu, dass die Zwischendruckplatte 13 ebenfalls axial verschoben wird, so dass der Reibschluss zwischen der Druckplatte 9, den äußeren Lamellenelementen 12, den Lamellenelemente 14, der Zwischendruckplatte 13 und dem Abtrieb 5 unterbrochen ist. Während das Gehäuseteil 4 und der Abtrieb 5 relativ zum Durchtrieb 2, d.h. der Antriebswelle 3, stillstehen, rotieren die äußeren Lamellenelemente 12 gemeinsam mit dem Zwischenelement 13, ohne dabei ein Drehmoment zu übertragen. Der zusätzliche Abtrieb 7 hingegen wird durch den als rotierende Antriebswelle 3 ausgeführten Durchtrieb 2 unabhängig davon angetrieben. Durch den unabhängig vom Schaltzustand der Kupplungsvorrichtung 1 antreibbaren zusätzlichen Abtrieb 7 der Kupplungsvorrichtung 1 lässt bzw. lassen sich einzelne Arbeitsaggregate einer landwirtschaftlichen Arbeitsmaschine, wie einer selbstfahrenden Erntemaschine oder einem Schlepper, antreiben, die für Grundfunktionen der Arbeitsmaschine von Bedeutung sind, ohne dass es des Betriebes der Arbeitsaggregate bedarf, die durch den schaltbaren Abtrieb 5 angetrieben werden.

Mit dem Überführen der Kupplungsvorrichtung 1 in den geschlossenen Schaltzustand wird zusätzlich auch der Abtrieb 5 von der Antriebswelle 3 angetrieben. Es stehen somit am Abtrieb als auch am zusätzlichen Abtrieb 7 das von der Antriebswelle 3 eingeleitete Drehmoment zur Verfügung.

**Bezugszeichenliste**

| | | | |
|---|---|---|---|
| 1 | Kupplungsvorrichtung | 31 | Ölraum |
| 2 | Durchtrieb | 32 | Wellendichtring |
| 3 | Antriebswelle | 33 | Stützscheibe |
| 4 | Gehäuseteil | 34 | Nut |
| 5 | Abtrieb | 35 | Dichtelement |
| 6 | Schraubverbindung | L | Längsachse |
| 7 | Abtrieb | | |
| 8 | Lager | | |
| 9 | Druckplatte | | |
| 10 | Ringkolben | | |
| 11 | Druckraum | | |
| 12 | Äußeres Lamellenelement | | |
| 13 | Zwischendruckplatte | | |
| 14 | Lamellenelement | | |
| 15 | Zwischenelement | | |
| 16 | Führungsstift | | |
| 17 | Kraftspeicher | | |
| 18 | Reibfläche | | |
| 19 | Bolzen | | |
| 20 | Durchgangsbohrung | | |
| 21 | Durchbohrung | | |
| 22 | Gleitlager | | |
| 23 | Aussparung | | |
| 24 | Absatz | | |
| 25 | Nut | | |
| 26 | Sicherungselement | | |
| 27 | Anschlag | | |
| 28 | Federelement | | |
| 29 | Drehdurchführung | | |
| 30 | Kanal | | |

## Patentansprüche

1. Kupplungsvorrichtung (1) für eine landwirtschaftliche Arbeitsmaschine, wobei die Kupplungsvorrichtung (1) einen ersten, einen Abtrieb (5) aufweisenden, Kupplungsteil und einen zweiten, axial verschieblichen, Kupplungsteil umfasst, durch welche die Kupplungsvorrichtung (1) zwischen einem offenen und einem geschlossenen Schaltzustand überführbar ist, sind, wobei der erste Kupplungsteil und der zweite Kupplungsteil auf einer Antriebswelle (3) angeordnet sind, wobei die Kupplungsvorrichtung (1) in geschlossenem Schaltzustand ein Drehmoment von der Antriebswelle (3) auf den Abtrieb (5) überträgt, **dadurch gekennzeichnet, dass** die, insbesondere hydraulisch betätigte, Kupplungsvorrichtung (1) mindestens zwei axial zueinander beabstandete, trocken laufende Lamellenelemente (12, 14) aufweist, welche koaxial zu einem Durchtrieb (2) und in axialer Richtung relativ zu diesem verschieblich angeordnet sind, wobei der erste Kupplungsteil und der zweite Kupplungsteil in geöffneter Schaltstellung relativ zum Durchtrieb (2) stillstehen, wobei der Durchtrieb (2) unabhängig von einem Schaltzustand der Kupplungsvorrichtung (1) einen zusätzlichen Abtrieb (7) antreibt, wobei die mindestens zwei Lamellenelemente (12, 14) mit Reibbelägen in Pad-Bauweise versehen sind.

2. Kupplungsvorrichtung (1) nach Anspruch 1 , **dadurch gekennzeichnet, dass** die mindestens zwei Lamellenelemente (12, 14) axial verschieblich auf einem koaxial zu dem Durchtrieb (2) angeordneten Zwischenelement (15) angeordnet sind, welches drehfest auf dem Durchtrieb (2) angeordnet ist.

3. Kupplungsvorrichtung (1) nach Anspruch 2, **dadurch gekennzeichnet, dass** in offenem Schaltzustand der Kupplungsvorrichtung (1) zwischen dem Zwischenelement (15) und dem ersten Kupplungsteil sowie dem zweiten Kupplungsteil eine Relativbewegung auftritt.

4. Kupplungsvorrichtung (1) nach einem der Ansprüche 1 bis 3, **dadurch gekennzeichnet, dass** die Lamellenelemente (14) durch eine Zwischendruckplatte (13) axial zueinander beabstandet sind.

5. Kupplungsvorrichtung (1) nach Anspruch 4, **dadurch gekennzeichnet, dass** die Zwischendruckplatte (13) mit dem ersten Kupplungsteil verbunden ist, wobei die Zwischendruckplatte (13) durch Kraftspeicher (17) rückstellbar ist.

6. Kupplungsvorrichtung (1) nach Anspruch 4 oder 5, **dadurch gekennzeichnet, dass** zur axialen Führung der Zwischendruckplatte (13) koaxial zum Durchtrieb (2) angeordnete Führungsstifte (16) vorgesehen sind, die in den ersten Kupplungsteil eingelassen sind.

7. Kupplungsvorrichtung (1) nach einem der Ansprüche 1 bis 6, **dadurch gekennzeichnet, dass** der zweite Kupplungsteil eine axial verschiebliche Druckplatte (9) umfasst, welcher eine äußere Lamelle (12) zugeordnet ist, die mit einer Lamelle (14) an der Zwischendruckplatte (13) in Eingriff bringbar ist, wobei die Druckplatte (9) durch Bolzen (19) mit einem die Kupplungsvorrichtung (1) zumindest abschnittsweise umgebenden Gehäuseteil (4) drehfest verbunden ist.

8. Kupplungsvorrichtung (1) nach Anspruch 7, **dadurch gekennzeichnet, dass** die Bolzen (19) in Gleitlagern (20) geführt sind, die in dem Gehäuseteil (4) angeordnet sind.

9. Kupplungsvorrichtung (1) nach Anspruch 7 oder 8, **dadurch gekennzeichnet, dass** zur Rückstellung der Druckplatte (9) Federelemente (28) auf den jeweiligen Bolzen (19) angeordnet sind.

10. Kupplungsvorrichtung (1) nach einem der Ansprüche 7 bis 9, **dadurch gekennzeichnet, dass** die Verbindung der Bolzen (19) mit der Druckplatte (9) ohne Unterbrechungen einer Reibfläche (18) der Druckplatte (9), die mit einer Lamelle (12) in Reibkontakt bringbar ist, erfolgt

11. Kupplungsvorrichtung (1) nach einem der vorangehenden Ansprüche, **dadurch gekennzeichnet, dass** zur Betätigung der Kupplungsvorrichtung (1) ein koaxial zu dem Durchtrieb (2) angeordneter, axial verschieblicher Ringkolben (10) vorgesehen ist, der zur Beaufschlagung mit einem hydraulischen Druck eingerichtet ist, der durch eine Zuleitung (29, 30) in dem Durchtrieb (2) zuführbar ist.

12. Kupplungsvorrichtung (1) nach Anspruch 11, **dadurch gekennzeichnet, dass** zwischen dem Durchtrieb (2) und dem Gehäuseteil (4) ein durch Wellendichtringe (32) abgedichteter Ölraum (31) ausgebildet ist, wobei sich die Wellendichtringe (32) durch eine hohe Druckfestigkeit sowie eine dem Ölraum abgewandte Staublippe auszeichnen.

13. Kupplungsvorrichtung (1) nach Anspruch 11 oder 12, **dadurch gekennzeichnet, dass** zur Abdichtung des Ringkolbens (10) gegenüber dem Gehäuseteil (4) Dichtelemente (35) in einer inneren und einer äußeren umlaufenden Nut (34) in einem topfförmigen, den Ringkolben (10) abschnittsweise radial und axial umschließenden Abschnitt des Gehäuseteils (4) angeordnet sind.

14. Kupplungsvorrichtung (1) nach einem der vorangehenden Ansprüche **dadurch gekennzeichnet, dass** der Durchtrieb (2) die Antriebswelle (3) eines Antriebsmotors ist.

## Claims

1. A clutch device (1) for an agricultural working machine,
wherein the clutch device (1) comprises a first clutch portion with an output (5) and a second, axially displaceable clutch portion, by means of which the clutch device (1) can be transferred between an open and a closed state of operation, wherein the first clutch portion and the second clutch portion are disposed on a drive shaft (3), wherein in the closed state of operation, the clutch device (1) transfers a torque from the drive shaft (3) to the output (5), **characterized in that** the clutch device (1), which in particular is hydraulically actuated, has at least two dry running disk elements (12, 14) which are separated with respect to each other which are coaxial with a through drive (2) and are disposed so as to be displaceable in an axial direction relative thereto, wherein in the open operating position, the first clutch portion and the second clutch portion are stationary relative to the through drive (2), wherein the through drive (2) drives an additional output (7) independently of a state of operation of the clutch device (1), wherein the at least two disk elements (12, 14) are provided with friction linings in a pad construction.

2. The clutch device (1) according to claim 1, **characterized in that** the at least two disk elements (12, 14) are disposed in an axially displaceable manner on an intermediate element (15) which is disposed coaxially with the through drive (2) and which is disposed on the through drive (2) in a manner which is fixed against rotation.

3. The clutch device (1) according to claim 2, **characterized in that** in the open state of operation of the clutch device (1), a relative movement develops between the intermediate element (15) and the first clutch portion as well as the second clutch portion.

4. The clutch device (1) according to one of claims 1 to 3, **characterized in that** the disk elements (14) are axially separated from one another by means of an intermediate pressure plate (13).

5. The clutch device (1) according to claim 4, **characterized in that** the intermediate pressure plate (13) is connected to the first clutch portion, wherein the intermediate pressure plate (13) can be reset by means of energy storage (17).

6. The clutch device (1) according to claim 4 or claim 5, **characterized in that** for the purposes of axial guidance of the intermediate pressure plate (13), guide rods (16) which are disposed coaxially with the through drive (2) are provided which are recessed into the first clutch portion.

7. The clutch device (1) according to one of claims 1 to 6, **characterized in that** the second clutch portion comprises an axially displaceable pressure plate (9) with which an outer disk (12) is associated and which can be brought into engagement with a disk (14) on the intermediate pressure plate (13), wherein the pressure plate (9) is connected by means of bolts (19) in a manner which is fixed against rotation to a housing portion (4) which surrounds at least sections of the clutch device (1).

8. The clutch device (1) according to claim 7, **characterized in that** the bolts (19) are guided in sliding contact bearings (20) which are disposed in the housing portion (4).

9. The clutch device (1) according to claim 7 or claim 8, **characterized in that** spring elements (28) are disposed on the respective bolts (19) in order to reset the pressure plate (9).

10. The clutch device (1) according to one of claims 7 to 9, **characterized in that** the connection of the bolts (19) to the pressure plate (9) is made without interruption to a friction surface (18) of the pressure plate (9) which can be brought into frictional contact with a disk (12).

11. The clutch device (1) according to one of the preceding claims, **characterized in that** in order to actuate the clutch device (1), an axially displaceable ring piston (10) is provided which is disposed coaxially with the through drive (2) and which is configured for the application of a hydraulic pressure thereto which can be supplied by means of a supply line (29, 30) in the through drive (2).

12. The clutch device (1) according to claim 11, **characterized in that** an oil chamber (31) which is sealed by means of shaft sealing rings (32) is formed between the through drive (2) and the housing portion (4), wherein the shaft sealing rings (32) are **characterized by** a high compressive strength as well as a dust lip which faces away from the oil chamber.

13. The clutch device (1) according to claim 11 or claim 12, **characterized in that** in order to seal the ring piston (10) from the housing portion (4), sealing elements (35) are disposed in an inner and an outer circumferential groove (34) in a cupshaped section of the housing portion (4) which radially and axially surrounds sections of the ring piston (10).

14. The clutch device (1) according to one of the preceding claims, **characterized in that** the through drive (2) is the drive shaft (3) of a propulsion engine.

## Revendications

1. Dispositif d'accouplement (1) pour une machine de travail agricole, le dispositif d'accouplement (1) incluant une première partie d'accouplement, comportant une partie menée (5), et une seconde partie d'accouplement à coulissement axial par l'intermédiaire de laquelle le dispositif d'accouplement (1) est transférable entre un état de commutation ouvert et un état de commutation fermé, la première partie d'accouplement et la seconde partie d'accouplement étant disposées sur un arbre d'entraînement (3), le dispositif d'accouplement (1) transmettant, dans l'état de commutation fermé, un moment de rotation de l'arbre d'entraînement (3) à la partie menée (5), **caractérisé en ce que** le dispositif d'accouplement, en particulier actionné hydrauliquement, (1) comporte au moins deux éléments de disque distants axialement l'un de l'autre, fonctionnant à sec (12, 14) qui sont disposés coaxialement à un arbre passant (2) et coulissants dans la direction axiale par rapport à celui-ci, la première partie d'accouplement et la seconde partie d'accouplement étant immobiles par rapport à l'arbre passant (2) en position de commutation ouverte, l'arbre passant (2) entraînant une partie menée supplémentaire (7) indépendamment d'un état de commutation du dispositif d'accouplement (1), les au moins deux éléments de disque (12, 14) étant munis de garnitures de friction conformés en plaquettes.

2. Dispositif d'accouplement (1) selon la revendication 1, **caractérisé en ce que** les au moins deux éléments de disque (12, 14) sont disposés à coulissement axial sur un élément intermédiaire (15) qui est disposé coaxialement à l'arbre passant (2) et qui est disposé solidaire en rotation sur l'arbre passant (2).

3. Dispositif d'accouplement (1) selon la revendication 2, **caractérisé en ce que**, dans l'état de commutation ouvert du dispositif d'accouplement (1), un déplacement relatif se produit entre l'élément intermédiaire (15) et la première partie d'accouplement ainsi que la seconde partie d'accouplement.

4. Dispositif d'accouplement (1) selon une des revendications 1 à 3, **caractérisé en ce que** les éléments de disque (14) sont mis à distance axiale l'un de l'autre par l'intermédiaire d'une plaque de pression intermédiaire (13).

5. Dispositif d'accouplement (1) selon la revendication 4, **caractérisé en ce que** la plaque de pression intermédiaire (13) est reliée à la première partie d'accouplement, la plaque de pression intermédiaire (13) pouvant être rappelée par l'intermédiaire d'un accumulateur de force (17) .

6. Dispositif d'accouplement (1) selon la revendication 4, ou 5, **caractérisé en ce que** pour le guidage axial de la plaque de pression intermédiaire (13) sont prévues des broches de guidage (16) qui sont disposées coaxialement à l'arbre passant (2) et qui sont engagées dans la première partie d'accouplement.

7. Dispositif d'accouplement (1) selon une des revendications 1 à 6, **caractérisé en ce que** la seconde partie d'accouplement inclut une plaque de pression à coulissement axial (9) à laquelle est associé un disque extérieur (12) qui peut être mis en prise avec un disque (14) contre la plaque de pression intermédiaire (13), la plaque de pression (9) étant solidarisée en rotation, par l'intermédiaire de goujons (19), à une partie de carter (4) entourant le dispositif d'accouplement (1) au moins par portions.

8. Dispositif d'accouplement (1) selon la revendication 7, **caractérisé en ce que** les goujons (19) sont guidés dans des paliers à glissement (20) qui sont disposés dans la partie de carter (4).

9. Dispositif d'accouplement (1) selon la revendication 7 ou 8, **caractérisé en ce que**, pour rappeler la plaque de pression (9), des éléments élastiques (28) sont disposés sur les goujons respectifs (19).

10. Dispositif d'accouplement (1) selon une des revendications 7 à 9, **caractérisé en ce que** la liaison des goujons (19) avec la plaque de pression (9) s'effectue sans interruptions d'une surface de friction (18) de la plaque de pression (9) qui peut être amenée en contact frictionnel avec un disque (12).

11. Dispositif d'accouplement (1) selon une des revendications précédentes, **caractérisé en ce que** pour l'actionnement du dispositif d'accouplement (1) est prévu un piston annulaire à coulissement axial (10) qui est disposé coaxialement à l'arbre passant (2) et qui est agencé pour être sollicité par une pression hydraulique, laquelle peut être amenée par l'intermédiaire d'une conduite d'amenée (29, 30) dans l'arbre passant (2).

12. Dispositif d'accouplement (1) selon la revendication 11, **caractérisé en ce qu'**entre l'arbre passant (2) et la partie de carter (4) est ménagée une chambre à huile (31) étanchable par l'intermédiaire de joints à lèvres (32), les joints à lèvres (32) se distinguant par une résistance élevée à la pression ainsi que par une lèvre antipoussière située à l'opposé de la chambre à huile.

13. Dispositif d'accouplement (1) selon la revendication 11 ou 12, **caractérisé en ce que**, pour étancher le piston annulaire (10) par rapport à la partie de carter (4), des éléments d'étanchéité (35) sont disposés dans des rainures périphériques intérieure et extérieure (34) dans une portion en forme de pot de la partie de carter (4), laquelle entoure le piston annulaire (10) par portions radialement et axialement.

14. Dispositif d'accouplement (1) selon une des revendications précédentes, **caractérisé en ce que** l'arbre passant (2) est l'arbre menant (3) d'un moteur d'entraînement.
